# FASCICULE DE BREVET EUROPEEN

(11) **EP 4 055 526 B1**
(45) Date de publication et mention de la délivrance du brevet: **13.03.2024**
(21) Numéro de dépôt: 20817453.2
(22) Date de dépôt: 03.11.2020
(51) Int. Cl.: G06K 19/02

(54) **PIÈCE TEXTILE MUNIE D'UNE ÉTIQUETTE ÉLECTRONIQUE COMPRENANT UN DISPOSITIF ÉLECTRONIQUE FILAIRE, PROCÉDÉ DE FABRICATION D'UNE TELLE PIÈCE**
TEXTILTEIL MIT EINEM ELEKTRONISCHEN ETIKETT MIT EINER DRAHTGEBUNDENEN ELEKTRONISCHEN VORRICHTUNG UND VERFAHREN ZUR HERSTELLUNG EINES SOLCHEN TEILS
TEXTILE PART PROVIDED WITH AN ELECTRONIC TAG COMPRISING A WIRED ELECTRONIC DEVICE AND METHOD FOR PRODUCING SUCH A PART

(30) Priorité: 08.11.2019 FR 1912590; 23.03.2020 FR 2002785
(43) Date de publication de la demande: 14.09.2022
(60) Demande divisionnaire: 24153846.1
(73) Titulaire: PRIMO1D, 38040 Grenoble Cedex 9 (FR)
(72) Inventeur: CARTEAUX, Nicolas, 88310 VENTRON (FR); GUIRIMAND, Anne, 38360 SASSENAGE (FR); SETTE, Daniele, 38000 GRENOBLE (FR)
(74) Mandataire: IP Trust
(86) Numéro de dépôt international: PCT/FR2020/051984
(87) Numéro de publication internationale: WO 2021/089939

(56) Documents cités:
- EP-A1- 2 362 960
- EP-A1- 2 502 188
- EP-A1- 2 772 873
- EP-B1- 1 390 926
- EP-B1- 2 362 960
- EP-B1- 2 502 188
- EP-B1- 2 772 873
- WO-A1-2019/175509
- FR-A1- 3 036 823
- US-A1- 2011 147 462
- US-A1- 2016 321 528

## Description

### DOMAINE DE L'INVENTION

La présente invention concerne le domaine de l'étiquetage électronique d'identification de pièces textiles, telles que des vêtements.

### ARRIERE PLAN TECHNOLOGIQUE DE L'INVENTION

On désigne souvent les étiquettes employées dans ce domaine par la dénomination « étiquette RFID » (des initiales de l'expression anglo-saxonne « Radio-Frequency IDentification », c'est-à-dire « identification par radiofréquence »). De telles étiquettes comprennent une puce électronique d'identification présentant des fonctions d'émission-réception radiofréquence couplée à une antenne.

Selon une première approche conventionnelle, l'antenne est formée par des pistes conductrices disposées sur un support plastique ou en papier. La puce est assemblée par collage au support de manière à mettre respectivement en contact ses plots de connexion avec les pistes conductrices formant l'antenne. Le support se présente généralement sous une forme rectangulaire dont les longueurs et largeurs présentent des dimensions de plusieurs centimètres de manière à pouvoir accommoder les dimensions nécessaires de l'antenne et pour faciliter la manipulation de l'étiquette.

L'ensemble fonctionnel constitué de la puce et de son support est généralement désigné par le terme « inlay » dans la littérature anglo-saxonne consacrée. De tels « inlays » sont généralement fabriqués collectivement sur une bande de support et sont disponibles sous la forme d'un rouleau.

Le document EP2502188 propose une étiquette électronique très conventionnelle dans lequel l'inlay est disposé dans une poche textile présentant une prédécoupe. L'étiquette est ensuite cousue sur un vêtement. Elle peut être retirée du vêtement en arrachant l'étiquette le long de la prédécoupe.

Pour former une étiquette électronique d'identification à partir d'un « inlay », on conditionne généralement cet inlay dans un boîtier de protection, par exemple en matière plastique comme cela est documenté pour le brevet US8212676. Les dimensions de l'étiquette ainsi formée sont, dans le document précité, relativement grandes : une hauteur de 5mm, une longueur de 150mm et une largeur de 22mm.

Pour faciliter l'intégration des fonctions d'identification dans des produits textiles, on a recherché à donner un facteur de forme filaire à une étiquette électronique. On connaît ainsi des documents US6329917, WO2016038342, WO2011161336, GB2472025, GB2472026, US20110147462, WO2008080245 ou WO2019175509 des fils textiles incorporant, espacés dans leurs longueurs, les antennes et les puces électroniques.

Par « fil textile » ou plus simplement par « fil », on désigne des éléments qui peuvent être tissés ou incorporés dans un produit textile. Ils présentent donc une résistance en tension, une flexibilité, et un facteur de forme conventionnelle dans le domaine du tissage pour être manipulés par des équipements conventionnels disponibles dans le secteur de la confection. De tels « fils textiles » incorporant des antennes et des puces électroniques RFID peuvent être intégrés aux produits textiles au cours de leurs fabrications ou rendus solidaires à ce produit après sa fabrication.

A titre d'exemple, on peut prévoir d'utiliser un fil textile RFID comme fil de trame ou de chaîne en lisière d'un tissu, qui peut être de très grande dimension. En disposant les dispositifs RFID espacés à intervalles réguliers le long du fil RFID formant le fil de trame ou de chaîne du tissu, on peut identifier automatiquement des longueurs de tissu, par exemple dans le sens de l'enroulement de ce tissu sur un support cylindrique.

Le document WO2009136837 propose ainsi de placer un transpondeur dans la couture d'une pièce textile. Le transpondeur est formé d'une diode reliée à deux portions de fils conducteurs formant une antenne, et d'une ligne de transmission filaire entre ces fils, en parallèle à la diode. Le transpondeur est encapsulé dans un matériau diélectrique. La manipulation du transpondeur proposé par ce document est difficile avec les équipements traditionnels du secteur de la confection. Il n'est pas sécurisé à la pièce textile, et il peut notamment glisser dans la couture. Coudre le transpondeur à la pièce textile n'est pas aisé, car le risque de piquer ce transpondeur, et de le rendre non fonctionnel, lors de la réalisation de cette couture est important.

Le document FR3036823 prévoit de fixer une étiquette incorporant un module RFID sur une pièce textile à l'aide du fil d'antenne « électrique » de ce module. L'antenne est cousue sur l'étiquette, elle s'étend de part et d'autre de cette étiquette : elle n'est donc pas intégrée à l'étiquette. Le module RFID de ce document est encombrant, car dans un tel module une puce est associée à une antenne magnétique, généralement formée de pistes conductrices disposées en boucle sur un substrat de maintien de la puce. L'intégration de ce module dans une couture nécessite plusieurs opérations de confection, dont la couture du fil d'antenne « électrique », ce qui rend son intégration dans la couture peu adaptée à un déploiement en volume de cette solution.

Le document EP2772873 propose une étiquette électronique formée d'un inlay comprenant une puce RFID 5 et une première antenne connectée à cette puce. Une résine peut encapsuler la puce et la première antenne pour les protéger. L'inlay repose (par l'intermédiaire d'un adhésif) sur un support flexible comprenant une seconde antenne électrique sous la forme d'un fil conducteur qui peut être cousu dans le support. La première antenne est couplée électromagnétiquement à la seconde.

La présente invention vise à fournir une étiquette électronique d'identification qui se distingue de cet état de la technique. Elle vise également à fournir un produit textile qui incorpore de manière ingénieuse cette étiquette électronique d'identification.

### BREVE DESCRIPTION DE L'INVENTION

En vue de la réalisation d'une partie au moins de l'un de ces buts, l'objet de l'invention propose un procédé selon la revendication 1.

Selon d'autres caractéristiques avantageuses et non limitatives de l'invention, prises seules ou selon toute combinaison techniquement réalisable :
- la couture de confection est une couture choisie dans la liste comprenant : un ourlet invisible à un fil, des points de surfil, des points de bourdon ou zigzag, des points de surjet, des points de recouvrement, des points droits ;
- la couture de confection comprend des points de surjet et dans lequel la puce et le fil d'antenne sont disposés sous des boucles des points de surjet ;
- l'étiquette électronique est cousue à la pièce textile par une partie au moins de la couture de confection ;
- la puce est une puce électronique d'identification ayant des fonctions d'émission réception radiofréquence ;
- le dispositif électronique filaire est constitué de la puce et du au moins un fil d'antenne, la puce présentant au moins un plot auquel est électriquement relié le au moins un fil d'antenne ;
- le fil d'antenne est disposé le long et parallèlement à un bord de l'étiquette.

Selon un autre aspect, l'invention propose une pièce textile munie d'une étiquette électronique selon la revendication 8.

Selon d'autres caractéristiques avantageuses et non limitatives de cet aspect de l'invention, prises seules ou selon toute combinaison techniquement réalisable :
- la couture de confection comprend des points de surjet et dans lequel la puce et le fil d'antenne sont disposés sous des boucles des points de surjet ;
- l'étiquette électronique est cousue à la pièce textile par une partie au moins de la couture de confection ;
- la couture de confection longe un bord de la pièce textile ;
- la puce est une puce électronique d'identification ayant des fonctions d'émission réception radiofréquence ;
- le dispositif électronique filaire est constitué de la puce et du au moins un fil d'antenne, la puce présentant au moins un plot auquel est électriquement relié le au moins un fil d'antenne ;
- la puce et le fil d'antenne sont recouverts par au moins un fil textile de couverture et/ou par enrobage d'une matière de protection ;
- le fil d'antenne est disposé le long et parallèlement à un bord de l'étiquette.

### BREVE DESCRIPTION DES DESSINS

D'autres caractéristiques et avantages de l'invention ressortiront de la description détaillée de l'invention qui va suivre en référence aux figures annexées sur lesquels :
[Fig. 1a]
[Fig. 1b]
[Fig. 2] Les figures 1a, 1b et 2 représentent des modes de mise en oeuvre d'une étiquette électronique conforme à l'invention ;
[Fig. 3] La figure 3 représente schématiquement un procédé de fabrication d'une étiquette électronique conforme à l'invention, ainsi qu'un équipement permettant de mettre en oeuvre ce procédé ;
[Fig. 4]
[Fig. 5]

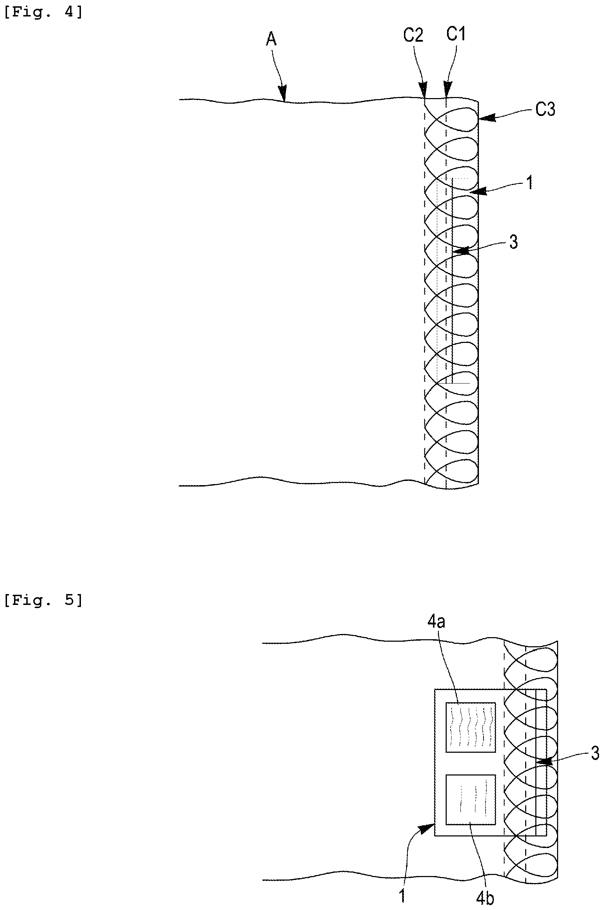

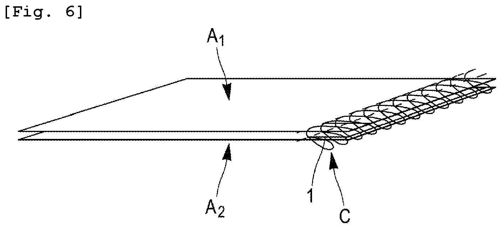

[Fig. 6] Les figures 4, 5 et 6 représentent plusieurs modes de mise en oeuvre d'une pièce textile incorporant des étiquettes électroniques conformes à l'invention.

### DESCRIPTION DETAILLEE DE L'INVENTION

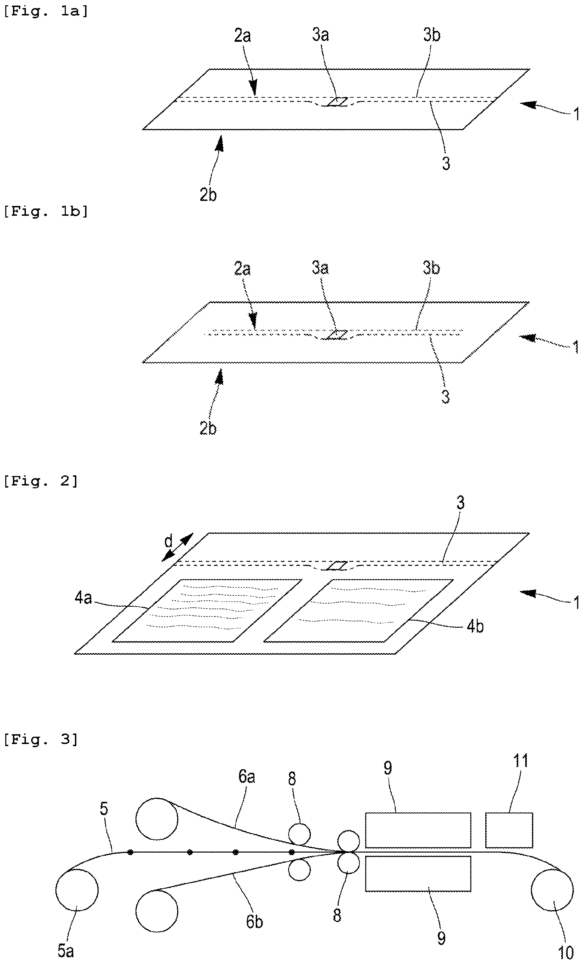

En référence aux figures 1a et 1b, on décrit une étiquette électronique d'identification 1 qui forme un premier aspect de la présente description. L'étiquette 1 présente une forme rectangulaire (et de manière plus générale trapézoïdale) dont la longueur est de plusieurs centimètres, typiquement comprise entre 3 cm et 20 cm. Les coins de l'étiquette 1 peuvent présenter une forme arrondie. La longueur de l'étiquette 1 est suffisante pour accommoder un fil d'antenne 3b d'un dispositif RFID 3, comme cela sera rendu apparent dans la suite de cette description. Avantageusement, ce fil d'antenne 3b s'étend de manière rectiligne dans la longueur de l'étiquette. Il peut s'étendre d'une extrémité à l'autre de l'étiquette, comme cela est représenté sur la figure 1a, ou s'approcher de ces extrémités sans les rejoindre, comme cela est représenté sur la figure 1b. Le fil d'antenne 3b peut également être disposé selon une diagonale de l'étiquette, ce qui permet de la rendre plus compacte. On peut également prévoir que le fil d'antenne ne soit pas parfaitement rectiligne, mais présente au moins une courbure dans le plan de l'étiquette, de manière à pouvoir accommoder une éventuelle déformation élastique de l'étiquette. La largeur de l'étiquette 1 est généralement plus réduite que sa longueur, typiquement inférieure au centimètre, et typiquement comprise entre 2mm et 8mm. Elle présente une épaisseur qui peut être comprise entre 0,1mm à 2 mm.

L'étiquette 1 des exemples des figures 1a et 1b est constituée de deux portions de ruban textile 2a, 2b assemblées et scellées l'une à l'autre par leurs faces principales. Entre ces deux faces, pris en sandwich, réside un segment d'un fil RFID 3 comprenant une puce électronique 3a et du fil d'antenne 3b. Les portions de ruban, et donc l'étiquette, présentent une flexibilité suffisante pour ne pas modifier la flexibilité de la pièce textile dans lequel ils sont destinés à s'intégrer. Similairement, ils peuvent présenter une élasticité permettant de se conformer à l'élasticité de cette pièce textile. Ils peuvent ainsi présenter une capacité d'élongation comprise entre 0% (et s'intégrer dans ce cas dans un jean ou dans une toile épaisse d'une combinaison de travail, c'est-à-dire des pièces textiles composées de tissus qui ne sont pas susceptibles de s'allonger) et 100% (et être aptes à s'intégrer dans des pièces textiles composées de fibres élastiques), et préférentiellement de l'ordre de 5 à 20% (pour s'intégrer dans des pièces textiles en mailles classiques comme des T-shirts, etc.) .

Pour cette raison d'intégration dans une pièce textile, l'utilisation de rubans en matière textile pour constituer l'étiquette 1 forme son mode préféré de mise en oeuvre, sans que toutefois cela ne soit le seul mode de mise en oeuvre possible. Les portions de rubans 2a, 2b peuvent ainsi être constituées de, ou comprendre, des matières très variées, choisies selon la technique de scellement employée ou selon la nature de la pièce textile dans laquelle l'étiquette est destinée à s'intégrer.

A titre d'exemple, et lorsque les deux portions de rubans sont scellées par soudure, l'une au moins des portions comprend une matière fusible à une température modérée, par exemple inférieure à 400°C, et généralement comprise entre 100°C et 400°C. Cette température doit être supérieure aux températures des traitements que l'étiquette est susceptible de subir au cours de son usage, et inférieure à une température qui conduirait à exposer la puce 3a à une température excessive (typiquement de l'ordre de 200°C). Une telle matière fusible peut correspondre à une matière thermoplastique usuellement employée dans le domaine de la confection (telle que du polyamide dont la température de fusion est d'environ 250°C ou du polyester dont la température de fusion est d'environ 200°C à 250°C). Elle peut correspondre également à une matière plastique.

Il n'est pas nécessaire que toutes les surfaces des portions de ruban 2a, 2b soient scellées entre elles : l'étiquette peut ainsi uniquement présenter des lignes ou des points de soudures localisés par exemple à proximité des bords formant sa longueur et, éventuellement des bords formant la largeur. Lorsque les points ou lignes de soudures sont ainsi périphériques et donc relativement éloignés de la puce électronique 3a, la soudure des rubans entre eux peut exposer localement et brièvement les rubans à une température excédant leur température de fusion sans toutefois que la puce électronique 3a elle-même ne soit exposée à une température supérieure à environ 200°C.

Lorsque le scellement est facilité par l'application d'une couche adhésive sur l'une au moins des portions de ruban, ou par l'intermédiaire d'une couture, on peut choisir plus librement la nature des rubans dont sont extraites les portions 2a, 2b.

Une au moins de ces portions de ruban 2a, 2b peut également être formé d'un laminé présentant une couche en matière fusible et une autre couche en matière non fusible, telle que du coton. La couche non fusible forme alors une au moins des surfaces exposées de l'étiquette 1, ce qui permet de lui donner une apparence extérieure et une texture permettant de l'intégrer facilement dans une pièce textile.

Pour ce qui concerne le segment de fil RFID 3 de l'étiquette 1, celui-ci comprend dans tous les cas au moins une puce électronique d'identification 3a ayant des fonctions d'émission réception radiofréquence électriquement assemblée à au moins un fil conducteur 3b formant l'antenne « électrique » d'émission réception. On désignera dans la suite de cet exposé par « dispositif électronique d'identification filaire » la puce 3a électriquement assemblée à au moins une antenne 3b (au moins un fil conducteur ou au moins une piste conductrice) compris dans un segment de fil RFID et par « fil RFID » un élément présentant un facteur de forme filaire et comportant, disposé dans sa longueur, une pluralité de dispositifs électroniques d'identification filaires.

Comme on l'a annoncé en introduction de cette demande, un tel segment de fil RFID 3 peut être réalisé de multiples manières.

Il peut notamment s'agir d'un fil RFID tel que décrit dans l'introduction de cette demande. Dans un tel fil, les dispositifs électroniques d'identification filaires sont généralement recouverts par au moins un fil textile de couverture, par exemple par guipage du fil de couverture. On peut également prévoir un fil d'âme le long duquel les dispositifs électroniques d'identification filaires sont disposés colinéairement ou en spire. En complément ou en remplacement du fil de couverture et/ou du fil d'âme, on peut prévoir d'enrober les dispositifs électroniques d'identification filaires d'une matière d'encapsulation qui peut être un plastique formé par extrusion.

Les documents EP2585628 et WO2019175509 divulguent différents modes de réalisation préférés de fil RFID compatibles avec la présente description, mais sans toutefois former les seuls modes de réalisation envisageables. Ces documents prévoient notamment un mode de réalisation selon lequel on peut incorporer dans un fil textile, et à espacements réguliers et choisis, des dispositifs électroniques d'identification filaires. Dans les fils RFID décrits par ces documents, collectivement désignés « guipés », les fils conducteurs d'antenne du dispositif électronique d'identification filaire sont disposés colinéairement ou en spiral, autour d'un fil d'âme qui peut présenter une caractéristique élastique. Lorsque le fil d'antenne est disposé en spiral, le fil d'antenne présente une grande capacité d'élongation qui rend l'incorporation de segments de ce fil RFID particulièrement adaptée à des pièces textiles élastiques.

La protection des dispositifs électroniques d'identification filaires par l'intermédiaire d'un fil textile de recouvrement et/ou par enrobage d'une matière de protection, présente l'avantage de protéger le fil conducteur formant antenne. On évite notamment que ce fil conducteur ne traverse les portions de ruban 2a, 2b entre lesquels il est pris en sandwich, notamment lorsque ces portions 2a, 2b sont en matière textile. Un tel phénomène peut être provoqué lorsque la l'étiquette 1 dans laquelle est intégrée un segment du fil RFID est solidarisée à une pièce textile qui est susceptible de se froisser, par exemple lors de son lavage.

On note que le segment de fil RFID 3 incorporé dans l'étiquette 1 ne se présente pas nécessairement sous la forme du fil textile « guipé » qui vient d'être présenté, même si ce mode de mise en oeuvre est préféré.

Ainsi le fil RFID peut être constitué d'une simple chaîne de dispositifs électroniques d'identification filaires, c'est-à-dire d'une pluralité de puces électroniques d'identification reliées entre elles par au moins un fil conducteur formant l'antenne (et préférentiellement deux fils conducteurs). Une telle chaîne constitue bien un fil RFID au sens de la présente description. On trouvera dans les documents US8782880, EP2810299 ou WO2018193198 des détails complémentaires sur des caractéristiques possibles d'une telle chaîne. On peut prévoir de protéger la chaîne, ou une partie de celle-ci, en la guipant d'un fil de couverture, ou en l'enrobant ou en l'extrudant d'un matériau de protection, telle qu'une résine. Un segment d'une telle chaîne est donc constitué d'une puce électronique 3a sur les plots de laquelle on a électriquement assemblé (par soudure par exemple) les fils conducteurs formant l'antenne, le tout pouvant éventuellement être incorporé, au moins en partie, dans un matériau de protection. Un tel segment peut parfaitement convenir pour être intégré en sandwich entre deux rubans, et former une étiquette 1 conforme à la présente description.

On peut également envisager que le fil RFID soit constitué de puces assemblées à un ruban filaire, sur lequel sont disposées des pistes longilignes et conductrices formant l'antenne. Ces pistes peuvent être formées par dépôt d'une fine couche d'aluminium, comme cela est bien connu en soi. Les puces sont assemblées, par exemple par collage, au ruban filaire pour mettre en contact leurs plots de connexion avec les pistes conductrices, et ainsi former une pluralité de dispositifs électroniques d'identification filaires fonctionnels. Le ruban filaire peut être constitué de plastique, de papier ou d'un tissu. Les pistes conductrices peuvent être également constituées par un ou des fil(s) conducteur (s), cousu(s) ou brodé(s) dans le ruban, que celui-ci soit formé d'un tissu, de plastique ou de papier. On peut également envisager que les pistes soient imprimées sur le ruban. Par « ruban filaire », on signifie que le ruban présente une surface plane dont la largeur doit être compatible avec le facteur de forme filaire des dispositifs électroniques d'identification conforme à la présente description, et présenter une largeur inférieure à 1mm ou 2mm. La longueur du ruban filaire, lorsque l'on en a découpé une portion pour isoler un dispositif électronique d'identification filaire, est dictée par la longueur nécessaire d'antenne, et est typiquement comprise entre 3 et 20cm.

Pour fabriquer une telle sorte de fil RFID en ruban, on forme sur un substrat de très grandes dimensions (par exempt de 1 à 2m de large, par exemple de 1.4 m, et qui peut présenter plusieurs dizaines de mètres de long) les pistes conductrices formant l'antenne le long de rangées dans la longueur du substrat, puis on assemble sur ce substrat les puces électroniques RFID pour mettre en contact leurs plots de connexion aux pistes conductrices ou aux fils conducteurs cousus. Après cette étape, on peut découper le substrat en ruban, le long des rangées, et ainsi former le fil RFID en ruban de ce mode de réalisation, que l'on peut mettre en bobine.

On note qu'outre les fonctions d'émission-réception et d'identification, la puce électronique 3a d'une étiquette 1 peut également être configurée pour présenter d'autres fonctions que celles d'identification, telles que des fonctions de mesure (de température, d'humidité, de pression) voire même des fonctions de luminescence.

Sur l'étiquette 1 représentée sur la figure 1, le segment de fil RFID 3 comporte une unique puce 3a. On pourrait prévoir d'intégrer plusieurs puces électroniques entre les portions de rubans 2a, 2b, chaque puce pouvant avoir des fonctions d'identification identiques (pour des raisons de fiabilité) ou des fonctions distinctes (par exemple une puce pour avoir une fonction d'identification et l'autre ayant une fonction unique de mesure). Un exemple d'une telle configuration est par exemple présenté dans le document EP3319168. On pourrait également prévoir de disposer plusieurs segments de fils 3, par exemple parallèlement les uns aux autres, entre les deux films 2a, 2b.

Avantageusement, le segment de fil RFID 3 est disposé le long et parallèlement à un bord de l'étiquette, selon sa longueur dans le cas de l'exemple représenté. Il peut être centré sur sa largeur comme cela est représenté sur la figure 1. On dispose ainsi sur l'étiquette et de chaque côté du segment de fil RFID de surfaces « inertes » qui peuvent permettre de solidariser l'étiquette 1 à un produit textile sans affecter le fonctionnement du fil textile RFID, comme cela sera détaillé dans la suite de cette description.

Les surfaces exposées de l'étiquette 1, c'est-à-dire les surfaces principales des portions de ruban 2a, 2b qui ne sont pas assemblées l'une à l'autre, peuvent servir de surface d'impression pour recevoir, par exemple, un code visuel identification (code-barres, QR code) et/ou toute autre mention textuelle que l'on souhaite associer au produit textile sur lequel l'étiquette est destinée à être apposée. À cet effet, on peut prévoir comme cela est représenté sur la figure 2, une étiquette électronique de forme étendue de manière à pouvoir disposer sur au moins une des surfaces exposées ce code visuel 4a et/ou ce message textuel 4b. Dans ce cas, il peut être avantageux de ne pas disposer le fil RFID centré sur la largeur de l'étiquette, mais le long et à proximité d'un de ses côtés.

Dans tous les cas, on choisira de préserver une distance d minimale entre le segment de fil RFID et un bord de l'étiquette qui permette de définir une bande inerte de matière suffisamment large pour y placer des points de couture permettant de solidariser l'étiquette sur une pièce textile. Cette distance d minimale peut être de 1 à 4mm.

L'étiquette électronique 1 peut être fabriquée en grande quantité et à grande cadence, de manière très simple. En référence à la figure 3, un procédé de fabrication de l'étiquette 1 comprend une étape de fourniture d'un fil RFID de grande longueur 5 et comprenant donc un grand nombre de dispositifs électroniques d'identification filaires. Le fil RFID peut se présenter sous la forme d'une bobine 5a, et l'étape de fourniture peut consister à dévider cette bobine. Chaque dispositif électronique d'identification est symbolisé par un point désignant la puce électronique 3a sur la figure 3. Comme on l'a déjà mentionné, le fil RFID de grande longueur 5 peut correspondre à un fil RFID guipé, ou à une chaîne de dispositifs électroniques d'identification, ou encore se présenter dans sa forme « en ruban ».

Dans le procédé de fabrication de la figure 3, le fil RFID 5 qui se dévide de sa bobine 5a est guidé pour être positionné entre deux rubans 6a, 6b. Ces rubans peuvent également être fournis sur la forme de bobines. Une pluralité de rouleaux de guidage ou presseur 8 et de pièces de guidage peut être prévue pour guider et entraîner de manière synchrone le défilement des rubans 6a, 6b et du fil RFID 5.

Au cours de ce défilement, et au niveau d'une zone où le fil RFID 5 est bien pris en sandwich entre les deux rubans 6a, 6b, les deux rubans 6a, 6b sont scellés l'un à l'autre afin de former un ruban fonctionnalisé, (c'est à dire un ruban continu sur lequel et le long duquel sont disposés des dispositifs d'identification filaires)

Comme on l'a déjà expliqué en détail dans un passage précédent, la nature respective des rubans 6a, 6b est liée à la technique de scellement employée, qui peut être très variée. On peut par exemple avoir muni l'une au moins des surfaces de contact des rubans 6a, 6b d'une matière adhésive. Dans ce cas, les rouleaux presseurs peuvent permettre de favoriser l'adhésion des surfaces.

Alternativement, et comme cela est représenté sur la figure 3, on peut prévoir une station de scellement 9, permettant de sceller les deux surfaces en contact des rubans. Cet équipement peut contenir des éléments chauffants combinés à une mise sous pression des surfaces pour favoriser le scellement, par exemple par soudure thermique. Il est entendu que la température et la pression doivent être modérées pour ne pas endommager le fil textile RFID 5 et notamment la puce électronique qu'il comporte.

Selon une variante de mise en oeuvre particulièrement avantageuse, ce scellement est réalisé par soudure à froid, par ultrason, par exemple par l'intermédiaire d'un ou d'une pluralité de sonotrode(s) disposé(s) dans la station de scellement 9.

On peut également envisager de sceller les rubans 6a, 6b par l'intermédiaire d'une couture ou d'une pluralité de coutures.

Dans le cas d'un scellement par soudure, on pourra avantageusement former des points ou des lignes de soudure sur les bords des rubans, suffisamment éloignés du fil RFID pour ne pas l'endommager par un échauffement excessif, comme cela a déjà été expliqué dans un passage précédent. On pourra également envisager de placer des points ou des lignes de soudures au niveau de zones de découpe du ruban fonctionnalisé afin que les portions de ruban 2a, 2b de chaque étiquette 1 extraite du ruban fonctionnalisé soit bien scellée sur toute leur périphérie. Avantageusement, on formera à minima un tel point ou une telle ligne de soudure au niveau du fil d'antenne dans la zone de découpe afin de bien maintenir celle-ci entre les deux portions de ruban. Cet avantage peut également être obtenu lorsque le scellement est réalisé par couture, en prévoyant une couture couvrant au moins partiellement les zones de découpe.

Dans le cas d'un scellement par soudure, qu'elle soit thermique ou par ultrason, on choisira la nature d'au moins un ruban pour qu'il comprenne une matière fusible à une température modérée, inférieure à 400°C, de sorte que lorsque la température de la bande est portée au-delà de cette température, localement et brièvement, on n'expose pas la puce électronique 3a à une température excessive qui pourrait l'endommager.

On peut naturellement combiner un scellement par soudure et/ou un scellement par application d'une matière adhésive et/ou un scellement par couture.

Comme on l'a déjà dit, le ruban peut être un ruban laminé. Cette étape de lamination peut être réalisée au cours du procédé de fabrication représenté sur la figure 3. Dans ce cas, on peut par exemple prévoir de disposer un ruban de scellement, qui se dévide d'une bobine dédiée (non représentée sur la figure 3), entre les deux rubans principaux avant leur scellement. Le ruban de scellement peut, selon la technique de scellement choisie, présenter deux faces munies d'une couche de matière adhésive ou être constitué d'une matière fusible.

On peut prévoir d'autres postes dans l'équipement de fabrication du ruban fonctionnalisé, tel qu'un poste d'impression 11 et/ou un poste de découpe ou de prédécoupe du ruban en étiquettes. Lorsqu'il n'est pas découpé en étiquettes, le ruban fonctionnalisé peut être collecté sur une bobine de ruban 10.

Dans une variante de ce mode de réalisation, le fil RFID n'est pas dévidé en continu d'une bobine pour s'insérer continuement entre les deux rubans 6a, 6b. On prévoit au contraire un poste de découpe du fil RFID, directement en aval de sa bobine de conditionnement, de manière à prélever des segments fonctionnels de ce fil (c'est-à-dire des segments comportant respectivement des dispositifs électroniques d'identification filaires). Les segments prélevés sont insérés un à un entre les deux rubans 6a, 6b, qui peuvent eux défiler continuement. A cet effet, on peut prévoir qu'un segment prélevé au niveau du poste de découpe du fil RFID soit transporté par l'intermédiaire d'un conduit, éventuellement assisté par un jet d'air comprimé injecté dans ce conduit, dans une zone d'insertion où il peut être happé par le défilement des rubans 6a, 6b afin d'être placé en sandwich entre ces deux rubans.

Ce mode de mise en oeuvre est intéressant, car il permet d'insérer de manière parfaitement maîtrisée un segment de fil RFID entre les deux rubans 6a, 6b. On peut en particulier laisser une distance suffisante entre deux segments, pour permettre le scellement et la découpe des deux rubans. Dans une étiquette 1 réalisée par ce procédé, représentée sur la figure 1b, l'antenne 3b du dispositif électronique d'identification filaire 3 ne s'étend pas d'une extrémité à l'autre, dans le sens de la longueur, de l'étiquette 1, et cette antenne ne débouche pas ou n'est pas affleurante aux côtés de l'étiquette. On peut parfaitement sceller les deux rubans 6a, 6b entre eux sur toute la périphérie de l'étiquette 1 pour encapsuler parfaitement le dispositif 3.

Lorsque le fil RFID que l'on cherche à intégrer entre deux rubans se présente sous la forme d'un fil RFID en ruban, on peut chercher à intégrer les étapes de fabrication du fil RFID en ruban à celles de l'étiquette. Comme on l'a précisé au préalable, de tels fils RFID en ruban sont généralement formés en rangées sur des substrats de grandes dimensions, avant d'être découpés en rubans. On peut prévoir d'intégrer dans ce procédé de fabrication, et avant la découpe en ruban du substrat, une étape d'assemblage visant à placer le substrat portant les dispositifs électroniques d'identification (ou une portion de celui-ci) entre deux laizes constituées des mêmes matières que celles déjà présentées des portions de rubans 2a, 2b. On préférera dans ce cas prévoir un assemblage des deux laizes par l'intermédiaire d'une matière adhésive, mais dans le cas où cet assemblage se réalise par soudure, on cherchera à former les points de soudure pour définir des zones entourant au moins en partie les dispositifs électroniques d'identification et prédéfinir ainsi les étiquettes 1. Cet assemblage réalisé, il peut être découpé en ruban.

On peut alternativement prévoir de positionner l'étape de scellement après l'étape de découpe en ruban de l'assemblage formé des deux laizes et du substrat. L'étape de scellement et les étapes ultérieures à ce scellement sont alors dans ce cas très similaire à celles décrites en relation avec la figure 3.

Dans une variante de ce mode de réalisation, une seule laize est employée et assemblée sur la face du substrat portant les dispositifs électroniques d'identification, l'autre laize étant alors remplacée dans cette variante par le substrat lui-même.

On note que cette méthode de fabrication conduisant à disposer les dispositifs d'identification filaires entre deux laizes peut également être mise en oeuvre pour toute forme de fil RFID. Dans ce cas, on dispose en rangées parallèles des sections étendues du fil RFID sur l'une des laizes de grande dimension que l'on recouvre ensuite d'une seconde laize. L'ensemble peut ensuite être redécoupé en ruban, le long des rangées parallèles de fils.

Dans encore un autre mode de mise en oeuvre, on forme une pluralité d'étiquettes électroniques en tissant un fil RFID dans un ruban textile. Dans un tel cas, le ruban fonctionnalisé est constitué d'un fil RFID tissé dans le ruban textile. L'étiquette électronique d'identification, après découpe du ruban, incorpore au moins un dispositif électronique filaire tissé dans une portion du ruban. Le fil RFID, qui peut être du type guipé, peut par exemple être tiré entre les fils de chaîne du ruban textile au cours de sa fabrication. Ou il peut être intégré après fabrication de ce ruban.

D'une manière très générale, le procédé de fabrication de l'étiquette électronique 1 comprend donc les deux étapes suivantes :
- disposer au moins un dispositif électronique filaire (qui peut être incorporé dans un fil RFID ou un segment de fil RFID) entre deux pièces (qui peuvent être des rubans, ou des laizes, ou une laize et le substrat de puces électroniques) ;
   - sceller les deux pièces entre elles pour définir au moins une étiquette électronique. Ce scellement peut avoir lieu avant la découpe en bandelette des laizes assemblées au substrat de puce, ou après cette découpe. Il peut être mis en oeuvre par soudure, par l'intermédiaire d'une matière adhésive, par couture...

Quelle que soit la technique de fabrication choisie, on dispose à l'issue du procédé de fabrication d'un ruban fonctionnalisé, c'est-à-dire d'un ruban (bande de matériau flexible, par exemple un tissu, étroite, longue et plate) dans lequel est intégré, dans toute sa longueur, un fil RFID ou dans lequel est intégré, espacés les uns des autres, des segments d'un fil RFID. Le fil RFID peut être de tout type, par exemple guipé, ou en ruban ou encore être composé d'une simple chaîne de dispositifs électroniques d'identification filaires.

Pour obtenir une étiquette électronique conforme à la présente description, on prélève des segments du ruban fonctionnalisé, par exemple en arrachant ou en découpant ces segments au niveau des marques de découpe préalablement formées par le poste d'impression 11 ou par un poste de prédécoupe. On s'assure bien entendu que dans chaque portion découpée du ruban d'une section de fil textile RFID comporte un dispositif électronique d'identification (puce et antenne) intègre et fonctionnel.

Dans tous les cas, le ruban fonctionnalisé selon les modes de mis en oeuvre décrit de la présente description et les étiquettes 1 prélevées de ce ruban présentent des facteurs de forme et de rigidité qui permettent de les manipuler très facilement pour les intégrer dans un produit ou dans une pièce textile à l'aide d'équipements conventionnels dans ce secteur industriel. On peut notamment coudre une étiquette sur la pièce textile, en faisant courir des points de couture dans une zone inerte de l'étiquette, par exemple courant d'un côté et/ou de l'autre côté du fil textile RFID 3.

Selon une approche particulièrement avantageuse, et qui forme d'ailleurs un aspect en soi de la présente invention, on solidarise au moins une étiquette à la pièce textile par l'intermédiaire d'une couture de confection, avantageusement sur un bord de cette pièce textile. Une telle couture de confection est une couture dont la fonction première est de traiter la pièce textile pour en faire un produit fini. La présente invention prévoit de tirer profit de cette couture de confection pour y intégrer l'étiquette, de sorte que le dispositif électronique d'identification filaire au moins soit disposé au sein de cette couture. De cette manière on protège efficacement le dispositif électronique avec le fil de couture, et il peut s'intégrer très facilement.

Les points constituant la couture peuvent être de nature très variés, tel que cela est documenté dans la norme ISO 4915. Il peut ainsi s'agir d'un ourlet invisible à un fil (de classe 103 selon la norme iso :4915), des points de surfil,, des points de bourdon ou zigzag (de classe 304), des points de recouvrement (de classe 406 ou 407), des points de surjet (selon l'un des points de la classe 500), des points droits (de classe 301 ou 2x301).

Sans pour autant exclure les points d'autre nature, la couture permettant de solidariser l'étiquette 1 à la pièce textile est avantageusement formée de points de surjet, et le dispositif électronique d'identification filaire est placé dans/sous les boucles des points de surjet. On rappelle que dans les points de surjet, des fils bouclent autour du bord de la pièce textile. Ces points forment une étape de confection d'une pièce textile visant à traiter le bord de cette pièce. Elle est typiquement mise en oeuvre par une surjeteuse qui est un équipement de confection textile permettant de simultanément assembler, filer les bords et de couper un excédent de tissu. Elle permet d'assembler des pièces de tissus en surfilant les bords de ces pièces. Un tel équipement est muni d'une pluralité d'aiguilles approvisionnées par une pluralité de fils textiles (au moins deux, parfois 5 ou plus) issus de bobines qui permettent de coudre et de surfiler simultanément la ou les pièces textiles. Il permet notamment la formation d'ourlets. Il est également muni d'une lame pour couper un excédent de tissu.

On a ainsi représenté sur la figure 4 une pièce textile A à laquelle une étiquette électronique d'identification 1 conforme à l'invention a été solidarisée, en la disposant entièrement entre les boucles du surjet.

On observe sur cette figure que l'étiquette 1 peut être retenue à la pièce textile A d'une part par l'intermédiaire d'une première couture droite c1, formée par une première aiguille de la surjeteuse, et sensiblement parallèle au fil textile RFID. Par ailleurs, l'étiquette 1 (et le segment de fil RFID contenu dans cette étiquette) est maintenue contre la pièce textile par les boucles c3 du surjet formées par une ou plusieurs autres aiguilles.

On peut naturellement prévoir d'autres coutures, formées par d'autres aiguilles, par exemple une seconde couture c2 sur la figure 4 parallèle à la première, l'ensemble de ces coutures formant les points de surjet.

Pour solidariser l'étiquette 1 et aboutir à la pièce textile A représentée sur la figure 4, on peut préalablement positionner à la main l'étiquette 1 sur la pièce et faire glisser l'ensemble sous un pied de glissement de l'équipement de surjetage. Mais de manière avantageuse, on peut prévoir un outillage additionnel dans lequel une étiquette RFID est positionnée et guidée pendant l'opération de couture pour s'intégrer à cette couture. On peut également prévoir un équipement automatique sur lequel est monté le ruban fonctionnalisé, par exemple sous la forme d'une bobine. L'équipement est alors apte à faire défiler le ruban fonctionnalisé, le couper, et ainsi définir une étiquette, et insérer cette étiquette pour qu'elle soit introduite au sein de la couture au cours de sa fabrication.

Il n'est pas nécessaire que toute l'étiquette 1 soit disposée entre les boucles de surjet de la pièce textile. C'est notamment vrai lorsque cette étiquette porte, sur une au moins de ces surfaces exposées, des motifs 4a, 4b (codes-barres, instructions textuelles) qui nécessitent d'être rendus visibles. Ainsi, la figure 5 représente une configuration dans laquelle seule une partie de l'étiquette 1, et notamment le dispositif électronique d'identification filaire 3, est disposée entre les boucles du surjet. On s'assure ainsi une bonne protection et une bonne tenue du segment de fil RFID.

La figure 6 représente un autre mode de confection d'une pièce textile, dans lequel l'étiquette 1 est disposée entre deux pièces textiles élémentaires A1, A2 qui sont maintenues l'une à l'autre par la couture C. Dans ce cas également on prévoit à minima de placer le fil RFID dans des boucles des points de surjet, et éventuellement l'étiquette 1 entière. Au moins une couture droite permet de solidariser l'étiquette aux deux pièces textiles élémentaires entre lesquelles elle est placée.

On note que le dispositif électronique d'identification 3 étant sous forme filaire et positionnée avec précision sur l'étiquette 1, il est facilement possible de coudre l'étiquette 1 sans endommager ce dispositif 3 (et notamment l'antenne 3a), ce qui n'est pas toujours le cas pour les étiquettes de l'état de la technique.

L'intégration de l'étiquette 1 peut se faire de manière répétable, fiable et robuste. Elle fait appel à des techniques de confection éprouvées, et ne génère pas de surcout excessif, puisqu'elle s'intègre dans des étapes déjà existantes de confection.

Bien entendu l'invention n'est pas limitée aux modes de mise en oeuvre décrits et on peut y apporter des variantes de réalisation sans sortir du cadre de l'invention tel que défini par les revendications.

Comme on l'a déjà évoqué, il n'est pas indispensable que la puce électronique du dispositif électronique soit constituée d'une puce électronique d'identification. Il peut s'agir d'une manière plus générale de tout type de puce électronique, par exemple une puce électronique formant un capteur qui peut optionnellement incorporer des fonctions d'émission-réception reliées à l'antenne afin de pouvoir communiquer ces mesures. Il peut alternativement s'agir d'une puce électronique présentant des fonctions de luminescence. De ce point de vue, et d'une manière générale, l'invention concerne donc une étiquette électronique comprenant un dispositif électronique filaire intégré dans un ruban.

## Revendications

1. Procédé de confection d'une pièce textile (A ; A1 , A2) comprenant une étape de formation d'une couture de confection (c1, c2, c3 ; C), le procédé étant **caractérisé en ce que** l'étape de couture de confection vise également à solidariser une étiquette électronique (1) à la pièce textile (A ; A1 , A2), l'étiquette électronique (1) étant formée d'un ruban constitué de deux portions de ruban textile (2a, 2b) assemblées et scellées l'une à l'autre par leurs faces principales et entre lesquels réside, pris en sandwich, un dispositif électronique filaire comportant une puce (3a) reliée électriquement à au moins un fil d'antenne électrique (3b), la puce (3a) et le fil d'antenne électrique (3b) étant disposés au sein de la couture de confection (c1, c2, c3 ; C).

2. Procédé de confection selon la revendication 1 dans lequel la couture de confection (c1, c2, c3 ; C) est une couture choisie dans la liste comprenant : un ourlet invisible à un fil, des points de surfil, des points de recouvrement, des points de bourdon ou zigzag, des points de surjet, des points droits.

3. Procédé de confection selon la revendication 1 ou 2 dans lequel la couture de confection (c1, c2, c3 ; C) comprend des points de surjet et dans lequel la puce (3a) et le fil d'antenne (3b) sont disposés sous des boucles des points de surjet.

4. Procédé de confection selon la revendication précédente dans lequel l'étiquette électronique (1) est cousue à la pièce textile par une partie au moins de la couture de confection (c1, c2, c3 ; C).

5. Procédé de confection selon l'une des revendications précédentes dans lequel la puce (3a) est une puce électronique d'identification ayant des fonctions d'émission réception radiofréquence.

6. Procédé de confection selon l'une des revendications précédentes dans lequel le dispositif électronique filaire est constitué de la puce (3a) et du au moins un fil d'antenne électrique (3b), la puce présentant au moins un plot auquel est électriquement relié le au moins un fil d'antenne électrique (3b).

7. Procédé de confection selon l'une des revendications précédentes dans lequel le fil d'antenne électrique (3b) est disposé le long et parallèlement à un bord de l'étiquette (1).

8. Pièce textile (A ; A1, A2) munie d'une étiquette électronique comprenant un dispositif électronique filaire comportant une puce (3a) reliée électriquement à au moins un fil d'antenne électrique (3b) l'étiquette électronique étant retenue par l'intermédiaire d'une couture de confection (c1, c2, c3 ; C), la puce (3a) et le fil d'antenne électrique (3b) étant disposés au sein de la couture de confection, **caractérisée en ce que** l'étiquette électronique est formée d'un ruban constitué de deux portions de ruban textile (2a, 2b) assemblées et scellées l'une à l'autre par leurs faces principales et entre lesquels réside, pris en sandwich le dispositif électronique filaire.

9. Pièce textile (A ; A1, A2) selon la revendication précédente dans laquelle la couture de confection comprend des points de surjet et dans lequel la puce (3a) et le fil d'antenne électrique (3b) sont disposés sous des boucles des points de surjet.

10. Pièce textile (A ; A1, A2) selon l'une des revendications 8 à 9 dans laquelle l'étiquette électronique est cousue à la pièce textile par une partie au moins de la couture de confection.

11. Pièce textile (A ; A1, A2) selon l'une des revendications 8 à 10 dans laquelle la couture de confection (c1, c2, c3 ; C) longe un bord de la pièce textile.

12. Pièce textile (A ; A1, A2) selon l'une des revendications 8 à 11 dans laquelle la puce (3a) est une puce électronique d'identification ayant des fonctions d'émission réception radiofréquence.

13. Pièce textile (A ; A1, A2) selon l'une des revendications 8 à 12 dans laquelle le dispositif électronique filaire est constitué de la puce (3a) et du au moins un fil d'antenne électrique (3b), la puce présentant au moins un plot auquel est électriquement relié le au moins un fil d'antenne électrique (3b).

14. Pièce textile (A ; A1, A2) selon la revendication précédente dans laquelle la puce (3a) et le fil d'antenne électrique (3b) sont recouverts par au moins un fil textile de couverture et/ou par enrobage d'une matière de protection.

15. Pièce textile (A ; A1, A2) selon l'une des revendications 8 à 14 dans laquelle le fil d'antenne (3b) électrique est disposé le long et parallèlement à un bord de l'étiquette (1).

## Patentansprüche

1. Verfahren zum Anfertigen eines Textilstücks (A; A1, A2), umfassend einen Schritt eines Ausbildens einer Anfertigungsnaht (c1, c2, c3; C), wobei das Verfahren **dadurch gekennzeichnet ist, dass** der Schritt des Anfertigens der Naht außerdem darauf abzielt, ein elektronisches Etikett (1) mit dem Textilstück (A; A1, A2) fest zu verbinden, wobei das elektronische Etikett (1) aus einem Band ausgebildet ist, das aus zwei Abschnitten von Textilband (2a, 2b) besteht, die zusammengefügt und durch ihre Hauptflächen miteinander versiegelt sind, und zwischen denen sich eine elektronische Drahtvorrichtung eingeklemmt befindet, die einen Chip (3a) aufweist, der mit mindestens einem elektrischen Antennendraht (3b) verbunden ist, wobei der Chip (3a) und der elektrische Antennendraht (3b) innerhalb der Anfertigungsnaht (c1, c2, c3; C) angeordnet sind.

2. Anfertigungsverfahren nach Anspruch 1, wobei die Anfertigungsnaht (c1, c2, c3; C) eine Naht ist, die aus der Liste ausgewählt ist, umfassend: einen Blindsaum mit einem Faden, Umstechstiche, Deckstiche, Zier- oder Zickzackstiche, Überwendlichstiche, Geradstiche.

3. Anfertigungsverfahren nach Anspruch 1 oder 2, wobei die Anfertigungsnaht (c1, c2, c3; C) Überwendlichstiche umfasst und wobei der Chip (3a) und der Antennendraht (3b) unter Schlaufen der Überwendlichstiche angeordnet sind.

4. Anfertigungsverfahren nach dem vorstehenden Anspruch, wobei das elektronische Etikett (1) durch einen Teil mindestens der Anfertigungsnaht (c1, c2, c3; C) an das Textilstück angenäht wird.

5. Anfertigungsverfahren nach einem der vorstehenden Ansprüche, wobei der Chip (3a) ein elektronischer Identifikationschip ist, der Hochfrequenzsende-/- empfangsfunktionen besitzt.

6. Anfertigungsverfahren nach einem der vorstehenden Ansprüche, wobei die elektronische Drahtvorrichtung aus dem Chip (3a) und mindestens einem elektrischen Antennendraht (3b) besteht, wobei der Chip mindestens einen Kontakt vorweist, mit dem der mindestens eine elektrische Antennendraht (3b) elektrisch verbunden ist.

7. Anfertigungsverfahren nach einem der vorstehenden Ansprüche, wobei der elektrische Antennendraht (3b) entlang und parallel zu einem Rand des Etiketts (1) angeordnet ist.

8. Textilstück (A; A1, A2), das mit einem elektronischen Etikett versehen ist, umfassend eine elektronische Drahtvorrichtung, die einen Chip (3a) aufweist, der mit mindestens einem elektrischen Antennendraht (3b) elektrisch verbunden ist, wobei das elektronische Etikett über eine Anfertigungsnaht (c1, c2, c3; C) festgehalten wird, wobei der Chip (3a) und der elektrische Antennendraht (3b) innerhalb der Anfertigungsnaht angeordnet sind, **dadurch gekennzeichnet, dass** das elektronische Etikett aus einem Band ausgebildet ist, das aus zwei Abschnitten von Textilband (2a, 2b) besteht, die zusammengefügt und durch ihre Flächen miteinander versiegelt sind, und zwischen denen sich die elektronische Drahtvorrichtung eingeklemmt befindet.

9. Textilstück (A; A1, A2) nach dem vorstehenden Anspruch, wobei die Anfertigungsnaht Überwendlichstiche umfasst und wobei der Chip (3a) und der elektrische Antennendraht (3b) unter Schlaufen der Überwendlichstiche angeordnet sind.

10. Textilstück (A; A1, A2) nach einem der Ansprüche 8 bis 9, wobei das elektronische Etikett durch einen Teil mindestens der Anfertigungsnaht an das Textilstück angenäht ist.

11. Textilstück (A; A1, A2) nach einem der Ansprüche 8 bis 10, wobei die Anfertigungsnaht (c1, c2, c3; C) einem Rand des Textilstücks entlangführt.

12. Textilstück (A; A1, A2) nach einem der Ansprüche 8 bis 11, wobei der Chip (3a) ein elektronischer Identifikationschip ist, der Hochfrequenzsende-/- empfangsfunktionen besitzt.

13. Textilstück (A; A1, A2) nach einem der Ansprüche 8 bis 12, wobei die elektronische Drahtvorrichtung aus dem Chip (3a) und mindestens einem elektrischen Antennendraht (3b) besteht, wobei der Chip mindestens einen Kontakt vorweist, mit dem der mindestens eine elektrische Antennendraht (3b) elektrisch verbunden ist.

14. Textilstück (A; A1, A2) nach dem vorstehenden Anspruch, wobei der Chip (3a) und der elektrische Antennendraht (3b) durch mindestens ein Abdecktextilgarn und/oder durch eine Umhüllung aus einem Schutzmaterial bedeckt sind.

15. Textilstück (A; A1, A2) nach einem der Ansprüche 8 bis 14, wobei der elektrische Antennendraht (3b) entlang und parallel zu einem Rand des Etiketts (1) angeordnet ist.

## Claims

1. Method for producing a textile part (A; A1, A2), comprising a step of forming a stitched seam (c1, c2, c3; C), the method being **characterized in that** the stitched seam step also aims to secure an electronic tag (1) to the textile part (A; A1, A2), the electronic tag (1) being formed from a strip consisting of two portions of textile strip (2a, 2b) which are assembled and sealed together by their main faces and between which a wired electronic device is sandwiched, a wired electronic device comprising a chip (3a) electrically connected to at least one electrical antenna wire (3b), the chip (3a) and the electrical antenna wire (3b) being arranged inside the stitched seam (c1, c2, c3; C).

2. Production method according to claim 1, wherein the stitched seam (c1, c2, c3; C) is a seam chosen from the list comprising: a single-thread blind stitch, overcasting stitches, cover stitches, satin or zigzag stitches, overlock stitches, straight stitches.

3. Production method according to claim 1 or 2, wherein the stitched seam (c1, c2, c3; C) comprises overlock stitches and wherein the chip (3a) and the antenna wire (3b) are arranged under loops of the overlock stitches.

4. Production method according to the preceding claim, wherein the electronic tag (1) is sewn to the textile part by at least part of the stitched seam (c1, c2, c3; C).

5. Production method according to one of the preceding claims, wherein the chip (3a) is an electronic identification chip having radiofrequency transmission-reception functions.

6. Production method according to one of the preceding claims, wherein the wired electronic device consists of the chip (3a) and at least one electrical antenna wire (3b), the chip having at least one pad to which the at least one electrical antenna wire (3b) is electrically connected.

7. Production method according to one of the preceding claims, wherein the electrical antenna wire (3b) is arranged along and in parallel with an edge of the tag (1).

8. Textile part (A; A1, A2) provided with an electronic tag comprising a wired electronic device comprising a chip (3a) electrically connected to at least one electrical antenna wire (3b), the electronic tag being retained by means of a stitched seam (c1, c2, c3; C), the chip (3a) and the electrical antenna wire (3b) being arranged inside the stitched seam, **characterized in that** the electronic tag is formed from a strip consisting of two portions of textile strip (2a, 2b) which are assembled and sealed together by their main faces and between which the wired electronic device is sandwiched.

9. Textile part (A; A1, A2) according to the preceding claim, wherein the stitched seam comprises overlock stitches and wherein the chip (3a) and the electrical antenna wire (3b) are arranged under loops of the overlock stitches.

10. Textile part (A; A1, A2) according to one of claims 8 to 9, wherein the electronic tag is sewn to the textile part by at least part of the stitched seam.

11. Textile part (A; A1, A2) according to one of claims 8 to 10, wherein the stitched seam (c1, c2, c3; C) runs along one edge of the textile part.

12. Textile part (A; A1, A2) according to one of claims 8 to 11, wherein the chip (3a) is an electronic identification chip having radiofrequency transmission-reception functions.

13. Textile part (A; A1, A2) according to one of claims 8 to 12, wherein the wired electronic device consists of the chip (3a) and at least one electrical antenna wire (3b), the chip having at least one pad to which the at least one electrical antenna wire (3b) is electrically connected.

14. Textile part (A; A1, A2) according to the preceding claim, wherein the chip (3a) and the electrical antenna wire (3b) are covered by at least one textile covering yarn and/or by coating with a protective material.

15. Textile part (A; A1, A2) according to one of claims 8 to 14, wherein the electrical antenna wire (3b) is arranged along and in parallel with an edge of the tag (1).
